# NEW EUROPEAN PATENT SPECIFICATION

(11) **EP 1 373 750 B2**
(45) Date of publication and mention of the opposition decision: **16.03.2011**
(45) Mention of the grant of the patent: 19.07.2006
(21) Application number: 02708478.9
(22) Date of filing: 27.03.2002
(51) Int. Cl.: F16D 55/40

(54) **DISC BRAKE**
SCHEIBENBREMSE
FREIN A DISQUE

(30) Priority: 27.03.2001 GB 0107617; 29.06.2001 GB 0115909
(43) Date of publication of application: 02.01.2004
(73) Proprietor: Delphi Technologies, Inc., Troy, MI 48007 (US)
(72) Inventor: BAYLIS, Christopher, Hexham, Northumberland NE44 5LW (GB)
(74) Representative: Lamb, Richard Andrew
(86) International application number: PCT/GB2002/001191
(87) International publication number: WO 2002/077483

(56) References cited:
- EP-A- 1 069 332
- WO-A1-01/98681
- DE-C2- 19 804 426
- GB-A- 2 184 801
- US-A- 3 780 834
- US-A- 3 788 429

## Description

This invention relates to a disc brake construction. More particularly the invention relates to the construction of the caliper of a spot-type automotive disc brake having one or more axially slidable discs. The described embodiments of the invention relate to such a disc brake.

An aspect of the construction of automotive spot-type disc brakes concerns the paramount need for economy of construction both as to hardware costs in relation to brake component supply for assembly on the vehicle production line, and in relation to ease of assembly (and the corresponding assembly time taken), which are all factors affecting the net cost of a brake for production line assembly purposes.

Likewise, brake weight is an important factor affecting acceptability of a given brake design. The brake construction represents part of the unsprung weight of the vehicle which is a vehicle design parameter not to be increased significantly without the attainment of a compensating advantage.

In the case of a fixed-caliper axially sliding disc brake construction there is a substantial structural requirement in relation to the caliper which has inevitable weight-incurring consequences and it is therefore a significant design factor in relation to such a brake to find a means whereby the design parameters concerning minimising caliper weight and maximising simplicity as it affects ease of assembly, are complied-with.

Existing constructional approaches to the design of such a caliper (such as GB 23 46 940A) have tended towards the well-established use of large high-tensile bolts (see bolts 44 in GB 23 46 940A) as significant structural elements of the caliper construction in association with related fabricated structural elements such as friction pad guides and this known form of construction has much to commend it in the sense of the convenient provision of facilities for desired or required design features in a manner which allows some degree of commonality with brakes adopting (perhaps for use in different environments) a different design approach.

US 3,780,834 and US 3,788,429 describe disc brakes having a single axially slidable disc, and incorporating a one piece integral caliper for mounting the friction pads. EP 1,069,332 A2 describes a disc brake with a one piece caliper with a pair of actuators and a single axially fixed disc, and so comprising a different type of disc brake. In all of these arrangements however the mounting and fitting of the friction pads is difficult and cumbersome, or requires additional components.

An object of the present invention is to provide disc brake apparatus wherein improvements are provided in relation to one or more of the constructional and/or weight factors discussed above, or improvements generally.

According to the invention there is provided a disc brake apparatus as defined in the accompanying claims.

In embodiments of the invention described below there is provided a brake construction in which integration of the main structural elements of a brake caliper construction by the use of casting techniques enables the provision of the requisite strength attributes in combination with an important contribution to weight moderation in a cost-effective manner.

Moreover, the adoption of the above-mentioned integrated construction provides significant simplification of the brake-installation assembly operations which are implicit in adoption of the brake for production vehicle assembly line purposes.

In this manner, the illustrated embodiments of the invention make an important contribution to production simplification and weight-moderating parameters of the brake construction in a manner which combines a meeting of the several design criteria discussed above and so as to meet the stringent parameters applicable to the provision of a disc brake for mass production vehicle utilisation purposes.

An aspect of the construction adopted in the illustrated embodiments relates to the mode of insertion into the brake assembly of the friction elements with their pads of friction material. This complements the construction adopted for the major elements of the caliper construction itself.

In this regard, the illustrated embodiments adopt a design approach in which provision is made, in combination with the integrated construction feature already mentioned, for the mounting of the friction elements in relation to the caliper structure itself in a manner which significantly simplifies the operations required for friction element assembly and service replacement.

For the latter purpose, the caliper construction adopts the use of a space-defining open construction for the generally frame-like caliper structure so that space is provided for the facility to insert the friction elements in an edgewise manner through the space defined by the caliper structure and into the relevant space alongside the brake disc (or the relevant one of the brake discs in a multi-disc brake) without the need for any significant disassembly other than (in some cases) the prior removal of resilient means (such as a leaf spring) which is provided to act between the caliper and the friction element for maintenance of disc-to-friction element co-planarity and related dynamic control requirements.

In this way the illustrated embodiments of the invention offer a caliper construction in which not only are the factors relating to construction simplification, reduced assembly time, mitigation of the tendency for improved construction to add to the unsprung weight of the vehicle, and the other related factors discussed above, treated in a manner which offers a significantly better compromise between their hitherto somewhat conflicting requirements, but also the brake itself has those important service and use advantages which come from ease of assembly and replacement of the most frequently -required service components. In this way maintenance costs are reduced for the user, which is always a potent factor persuasive for the practical utilisation of a brake construction.

An aspect of the integrated construction disclosed herein relates to the strength to weight ratio and the provision of such in an economical manner having regard to both hardware costs and assembly costs as discussed above.

The provision of a structure which represents a well-proportioned balance between these factors is often a matter of fine judgement and the factors contributing to the technical balance are often difficult to disentangle, but it is plain from an arms length analysis of the factors affecting these issues in relation to a fixed caliper structure that the integrated construction disclosed in the illustrated embodiments offers an important feature of assistance to design-compliance with these factors.

An important aspect of the structure and function of the described embodiments relates to the integration of the entire caliper structure (including the middle or bridging portion and the end plate or stop of the caliper) into the disc brake structure as a whole, notably the main support structure (of the disc brake) namely the mounting block or post (usually a casting) in which the brake's actuating piston and cylinder assembly are located.

Because fixed caliper disc brakes almost inevitably have a structure in which the bridge or caliper which extends across the inner or outer periphery of the brake disc (or brake discs) is fixed and provides a structure against which the disc or discs are compressed between the friction elements, the usual arrangement (see GB 23 4 940A) is that this fixed structure is bolted-to the wheel-mounting post or pillar (usually a casting) which serves to carry the roadwheel -mounting bearings and is connected through the vehicle suspension to the vehicle body.

Accordingly, the caliper structure is thus the non-rotatable reference base which serves to resist the rotary friction forces generated during braking as well as to provide that structure which needs substantial strength in the tension-resisting sense in order to enable the substantial compressive forces required during braking to be applied to the pair or pairs of friction elements between which the disc or discs are interleaved.

Of course, disc brakes of the fixed disc and pivoted caliper kind (eg GB 15 19 599 and GB 20 57 076A and WO 94/25771) are provided with substantial casting-type caliper constructions, but the circumstances of use and the force regime in fixed disc brakes differ substantially from those of disc brakes in which the discs are actually floating, and therefore provide little if any guidance as to the cost-effective manner in which to provide a structure capable of dealing with the forces arising in such a (sliding disc) brake.

In the described embodiments, the constructional approach adopted is to provide a caliper structure for the brake, which is provided with mid (bridging) and end (lateral) portions capable of transmitting (respectively) the tension and tension-produced bending forces and loads, and which is adapted to be integrated with the main non-rotatable supporting structure of the brake in the sense of transmitting thereto the braking-generated loads as part of the rigid structure thereof.

In embodiments of the invention the caliper comprises a disc-bridging portion which is formed integrally (by being part of a unitary casting) with the main brake pillar or wheel-mounting casting. In this way, the caliper bridge portion projects from that casting and provides a structurally efficient extension thereof which provides a way for meeting the criteria discussed above and which also accommodates the inclusion in the assembly of an integral caliper end plate structure. In this latter way, there is readily provided the entire brake caliper structural framework as an integrated casting assembly which offers the structural and economic features discussed above without the related technical shortcomings of previous proposals as discussed above. We have discovered that significant benefits in the area of cost effective structural strength in relation to weight and assembly factors can be achieved where the entire caliper structure is formed as an integrated casting.

Nethertheless, by adopting an approach in which the caliper structure is in this way adapted to have the caliper-transmissible braking loads transferred or transmitted into the main brake casting (or wheel-mounting support structure) by adaptation of the mode of construction of the caliper in this way, there is provided means for the attainment of the advantages discussed above. Such adaptation for load-transmission amounts in the embodiments to the provision of at least one braking load transmitting integral casting joint which serves in use to transmit braking load from the bridging caliper portion into the adjacent lateral caliper portion (which serves to enable disc-clamping forces to be applied to the friction elements and thus to the discs). Such an arrangement has, we have discovered, particular merit in terms of transmitting the braking load around the structure of the disc's (or discs') periphery. Such an arrangement provides in a critical design area a structure well adapted to provide a cost-effective load transmission route around and into the relevant structures, offering the necessary reserve strength in an overload situation, and yet using accessible techniques.

Embodiments of the invention will now be described by way of example with reference to the accompanying drawings in which:
Figure 1 shows in block diagram format a spot-type automotive disc brake comprising a pair of axially slidable discs and associated friction elements, an actuating mechanism therefor and a fixed caliper or bridge structure overlying same;
Figure 2 shows an exploded perspective view of a disc brake generally of the same kind as that illustrated in Fig 1 but employing the non-integrated multi-piece mode of caliper construction, from which the present invention takes its starting point.

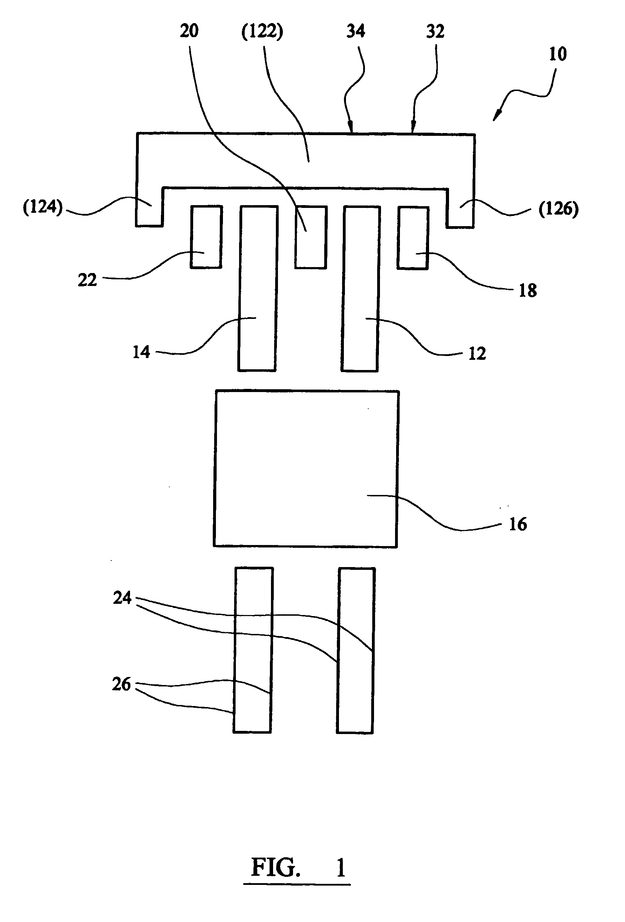

As shown in Fig 1 a spot-type automotive disc brake 10 comprises a pair of rotatable brake discs 12, 14, a rotatable mounting 16 for the brake discs to permit rotation of the discs and which is adapted to drive the brake discs and have exerted thereon the braking effect by the discs when the disc brake 10 is actuated.

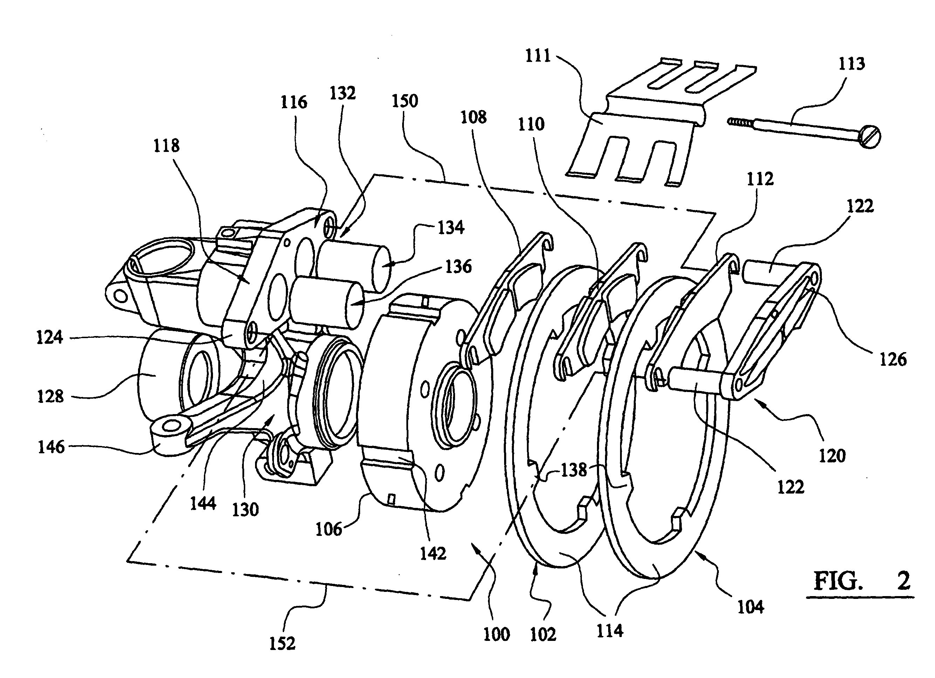

Two pairs of friction elements 18, 20 and 20, 22 are provided and are adapted to frictionally engage braking surfaces 24, 26 provided at opposite sides of brake discs 12, 14 to effect braking on actuating actuation means for the brake. Central friction element 20 is double-sided for frictional engagement with the mutually-inwardly facing braking surfaces 24, 26 of brake discs 12, 14 and is provided with appropriately facing friction pad material accordingly (as shown in Fig 2 at 108, 110, 112) in each case a generally flat metal backing plate and secured thereto and standing proud thereof a body of friction material of known construction for high durability frictional engagement with the relevant braking surface of the relevant brake disc. In the case of central friction element 20, the friction material is provided at both faces of the backing plate .

Brake discs 12, 14 are axially slidable in use with respect to their rotatable mounting 16 under the action of friction elements 18, 20, 22 and the actuation means (to be described below) therefor during braking. For example the brake discs may be keyed to the rotatable mounting or hub 16 at three or more locations and resilient means may act there between. We refer to the disclosure in our co-pending application number GB 0010810.0.

A fixed non-rotatable mounting 32 for friction elements 18, 20,22 is provided comprising a caliper or bridge structure 34 which is mounted on a fixed structure of the vehicle to be braked, for example on the wheel mounting and which straddles the brake discs 12, 14 and also provides a mounting for actuation means 36,38 (indicated diagrammatically) which applies inwardly directed braking forces to the outer friction elements 18, 22, thereby causing frictional engagement with the brake discs 12, 14 and slight sliding movement of those discs with respect to their rotatable mounting 16. In Fig 1 of course it can be seen that the clearances between the structures have been greatly exaggerated for simplicity of diagrammatic illustration. The actuation means 36, 38 comprises a piston and cylinder assembly (not seen in Fig 1). The actuation means is one-sided with a fixed structure at one side of caliper 34 and of the assembly of discs and friction elements (which fixed structure comprises a stop plate extending from caliper 34), and against which fixed structure the assembly is pushed by the single actuation means. Further details in this regard may be found in our co-pending applications GB9928162.8 and GB9926022.6.

Caliper 34 providing a fixed and non-rotatable mounting 32 for the friction elements 18 to 22 is adapted to permit sliding movement of the friction elements into and out of frictional engagement with the brake discs while resisting rotational movement of the friction elements under the action of frictional forces generated by engagement of the friction elements with the discs 12, 14.

Having thus considered the general nature of the construction of the disc brake 10 and its general mode of use, we now turn to consider the more detailed question of its construction, which will be described with reference to the disc brake shown in detail in Fig 2.

As shown in Fig 2 a spot-type automotive disc brake 100 comprises a pair of rotatable brake discs 102, 104 and a rotatable mounting 106 for the brake discs to permit such rotation, the mounting being adapted to drive the brake discs and have inserted thereon a braking effect by the brake discs when the disc brake 100 is actuated. Mounting 106 is in the form of a hub member of generally drum-like form.

Friction elements 108, 110, 112 are provided and adapted to frictionally engage braking surfaces 114 on opposite sides of the brake discs to effect braking on actuation of actuation means 116 therefor.

Brake discs 102, 104 are axially slidable in use with respect to mounting 106 under the action of friction elements 108, 110, 112 and under the action of said actuation means 116 during braking.

A non-rotatable mounting 118 comprising a caliper 120 for the friction elements 108, 110, 112 is provided and adapted to permit sliding movement of the friction elements into and out of frictional engagement with disc 102, 104 while resisting movement of the friction elements under the action of frictional forces generated by engagement of the friction elements with the discs. A three-limbed leaf spring 111 and associated mounting bolt 113 spring-loads the friction elements from above to provide dynamic control and anti-tilt functions under the conditions of use. Caliper 120 comprises a caliper bridge portion 122 or mid-portion adapted to extend across a periphery of the discs 102, 104 and two caliper lateral portions 124, 126 adapted to be located one at each lateral side of the assembly of discs 102, 104.

The rotatable mounting 106 for brake discs 102, 104 comprises a wheel bearing 128 for a wheel (not shown) of an automotive vehicle, the wheel bearing 128 being mounted on a non-rotatable support structure 130 connected at one side of the assembly of discs 102, 104 to one (124) of the lateral portions 124, 126 of the non-rotatable caliper 120. The non-rotatable support structure 130 also serves to mount, at the same side of discs 102, 104 the actuation means 132 for the brake, which actuation means comprises twin piston and cylinder assemblies 134, 136.

Brake discs 102, 104 are axially slidable in use with respect to mounting 106 by virtue of sliding engagement of inwardly projecting drive elements 138 which slidably and drivably engage in corresponding drive channels 140 formed in rotatable mounting 106.

Caliper 120 has caliper bridge portion 122 forming spaced mounting elements for the friction elements 108, 110, 122, the spacing of the mounting elements permitting the friction elements to be located by insertion into their working positions through the space between the mounting elements so as to be supported thereon and this being done without removing the brake discs.

As also shown in Fig 2, non-rotatable support structure 130 comprises a substantial wheel-mounting casting 144 having a steering arm 146

It will be noted that the inboard caliper lateral portion 124 is formed integrally with the cylinders of the piston and cylinder assemblies 134, 136 and thus with the casting of non-rotatable support structure 130, as seen in the brake construction shown in Fig 2.

Caliper bridge portion 122 and caliper lateral portions 124, 126 comprise an integrated structure formed as a casting so as to be adapted to transmit braking loads directly into the inboard caliper lateral portion 124 which is mounted on the non-rotatable support structure 130 which also mounts the piston and cylinder assemblies 134, 136. In Fig 1, this integrated structure has been shown by the indication at 32 and 34 of a one-piece structure with no divisions between the caliper lateral portions 124, 126 and the bridge portion 122.

So far as the detailed embodiment of Fig 2 is concerned, the adaptation of the multi-piece caliper construction to the integrated casting format of the Fig 1 showing of an embodiment of the invention requires that the caliper bolts and their threaded bores and the associated tubular mounting elements 144 be subsumed into a cast format. This change is indicated in Fig 2 by the construction lines 150, 152 indicating the integral collection of the caliper bridge portions 122 with the caliper lateral portions 124, 126 in accordance with the teaching of the invention. This cast structure is constructed (metallurgically) so as to have a strength element comparable to that which has been provided in previous multi-piece constructions by the use of suitable bolt-format tensile members (not shown).

## Claims

1. A spot-type automotive disc brake (100) comprising :-
a) at least one rotatable brake disc (102,104);
b) a rotatable mounting (106) for said brake disc (12,14) to permit such rotation and which is adapted to drive said brake disc (102,104) and to have exerted thereon a braking effect by said brake disc (102,104) when the disc brake (100) is actuated;
c) at least one pair of friction elements (108,100,112) adapted to frictionally engage braking surfaces (114) on opposite sides of said brake disc (102,104) to effect braking on actuation of actuation means (132) therefor;
d) said brake disc (102,104) being axially slidable in use with respect to said mounting (106) therefor under the action of said friction elements (108, 110, 112) and said actuation means (132) therefor during braking;
e) a non-rotatable mounting (118) comprising a caliper (120) for said friction elements (108,110,112) adapted to permit sliding movement of at least one of same into and out of frictional engagement with said disc (102,104) while resisting movement of same under the action of frictional forces generated by engagement of same with said disc (102, 104); and
f) said caliper (120) comprising a caliper bridge portion (122) adapted to extend across a periphery of said disc (102,104) and two caliper lateral portions (124,126) adapted to be located one at each lateral side of said disc (102,104);
g) said rotatable mounting (106) for said brake disc (102,104) comprising a wheel bearing (128) for a wheel of an automotive vehicle and providing said wheel bearing (128) mounted on a non-rotatable support structure (130) connected at one side of said disc (102,104) to one of said lateral portions (124) of said non-rotatable caliper (120), and serving to mount also at the same side of said disc (102,104), said actuation means (132) for said brake (100) comprising a piston and cylinder assembly (134, 136);
h) said caliper bridge portion (122) and said one of said caliper lateral portions (124) at said one side of said disc (102, 104) comprising an integrated structure formed as a casting so as to be adapted to transmit braking loads directly into the caliper lateral portion (124) which is mounted on said non-rotatable support structure (130) which mounts said piston and cylinder assembly (134, 136); and
i) said caliper lateral portion (126) at the other side of said disc (102,104) from said piston and cylinder assembly (134,136) comprising an integrated cast structure with said caliper bridging portion (122) whereby both said caliper lateral portions (124,126) comprise an integrated cast structure in the form of a casting incorporating said caliper bridging portion (122);
said caliper bridge portion (122) comprising a frame structure including integral spaced mounting elements for said friction elements (108, 110, 112) with the frame structure and mounting elements defining a space within the caliper permitting at least one friction element (108, 110, 1,12) to be located by insertion into its working position through the space in the caliper (120) between said mounting elements so as to be supported thereon, without removing said brake disc (102, 104) ;
**characterised in that** said caliper lateral portions (124, 126), said caliper bridge portion (122), and the non-rotatable support structure (130) are formed as a unitary integrated cast structure.

2. A spot-type automotive disc brake (100) as claimed in claim 1 comprising a pair of rotatable brake discs (102,104) axially slidably mounted in use with respect to said mounting (106) therefor under the action of said friction elements (108, 110, 112) and said actuation means (132) therefor during braking.

## Patentansprüche

1. Punkt-Scheibenbremse (100) für Fahrzeuge, umfassend:
a) mindestens eine drehbare Bremsscheibe (102, 104),
b) eine drehbare Anbringung (106) für die Bremsscheibe (12, 14), um eine solche Drehung zu ermöglichen, wobei die Anbringung ausgebildet ist, die Bremsscheibe (102, 104) anzutreiben, und auf sie durch die Bremsscheibe (102, 104) eine Bremswirkung ausgeübt wird, wenn die Scheibenbremse (100) betätigt wird,
c) mindestens ein Paar Reibungselemente (108, 100, 112), die ausgebildet sind, mit Bremsflächen (114) auf abgewandten Seiten der Bremsscheibe (102, 104) in Reibungskontakt zu treten, um mit Betätigung von dafür vorgesehenen Betätigungsmitteln (132) einen Bremsvorgang zu bewirken,
d) wobei die Bremsscheibe (102, 104) bei Gebrauch bezüglich der dafür vorgesehenen Anbringung (106) unter Einwirkung der Reibungselemente (108, 110, 112) und der dafür vorgesehenen Betätigungsmittel (132) während des Bremsvorgangs axial verschiebbar ist,
e) eine nicht-drehbare Anbringung (118), umfassend einen Sattel (120) für die Reibungselemente (108, 110, 112), der ausgebildet ist, um eine Gleitbewegung von mindestens einem derselben in Reibungskontakt mit der Scheibe (102, 104) und aus diesem heraus zu ermöglichen, während er einer Bewegung derselben unter der Wirkung von Reibungskräften, die durch Kontakt derselben mit der Scheibe (102, 104) erzeugt werden, widersteht, und
f) wobei der Sattel (120) einen Sattelbrückenteil (122), der ausgebildet ist, sich quer zum Umfang der Scheibe (102, 104) zu erstrecken, sowie zwei seitliche Sattelteile (124, 126) umfasst, die so ausgebildet sind, dass einer auf jeder Seite der Scheibe (102, 104) angeordnet ist,
g) wobei die drehbare Anbringung (106) für die Bremsscheibe (102, 104) ein Radlager (128) für ein Rad eines Fahrzeugs hat und das Radlager (128) auf einer nicht-drehbaren Tragekonstruktion (130) zu befestigen ist, die auf einer Seite der Scheibe (102, 104) mit einem der seitlichen Teile (124) des nicht-drehbaren Sattels (120) verbunden ist und auch dazu dient, auf derselben Seite der Scheibe (102, 104) die Betätigungsmittel (132) für die Bremse (100) zu befestigen, die eine Kolben- und Zylindereinheit (134, 136) umfassen,
h) wobei der Sattelbrückenteil (122) und der eine der seitlichen Sattelteile (124) auf der einen Seite der Scheibe (102, 104) eine integrierte Konstruktion umfasst, die als ein Gussstück ausgebildet ist, sodass es geeignet ist, Bremslasten direkt in den seitlichen Sattelteil (124) zu übertragen, der auf der nicht-drehbaren Tragekonstruktion (130) montiert ist, die die Kolben- und Zylindereinheit (134, 136) befestigt, und
i) wobei der seitliche Sattelteil (126) auf der der Kolben- und Zylindereinheit (134, 136) abgewandten anderen Seite der Scheibe (102, 104) eine integrierte Gusskonstruktion mit dem Sattelbrückenteil (122) umfasst, wobei die beiden seitlichen Sattelteile (124, 126) eine integrierte Gusskonstruktion in Form eines den Sattelbrückenteil (122) enthaltenden Gussstücks umfassen,
wobei der Sattelbrückenteil (122) eine Rahmenkonstruktion mit integrierten beabstandeten Befestigungselementen für die Reibungselemente (108, 110, 112) umfasst, wobei die Rahmenkonstruktion und die Befestigungselemente einen Raum innerhalb des Sattels begrenzen und somit ermöglichen, dass mindestens ein Reibungselement (108, 110, 112) durch Einsetzen in seine Arbeitsstellung durch den Raum in dem Sattel (120) zwischen den Befestigungselementen so angeordnet wird, dass es darauf gehalten wird, ohne die Bremsscheibe (102, 104) zu entfernen;
**dadurch gekennzeichnet, dass** die seitlichen Sattelteile (124, 126), der Sattelbrückenteil (122) und die nicht-drehbare Tragekonstruktion (130) als eine einstückige integrierte Gusskonstruktion ausgebildet sind.

2. Punkt-Scheibenbremse (100) für Fahrzeuge nach Anspruch 1, umfassend ein Paar drehbare Bremsscheiben (102, 104), die bei Gebrauch gegenüber der dafür vorgesehenen Anbringung (106) unter Einwirkung der Reibungselemente (108, 110, 112) und des dafür vorgesehenen Betätigungsmittels (132) während des Bremsvorgangs axial verschiebbar befestigt sind.

## Revendications

1. Frein à disque de type par points pour automobile (100) comprenant :
(a) au moins un disque de frein rotatif (102, 104) ;
(b) une monture rotative (106) pour ledit disque de frein (12, 14) qui permet cette rotation et qui est prévue pour entraîner ledit disque de frein (102, 104), et sur laquelle un effet de freinage par ledit disque de frein (102, 104) est exercé lorsque le frein à disque (100) est actionné ;
(c) au moins une paire d'éléments de friction (108, 100, 112) prévus pour venir en contact de friction avec des surfaces de freinage (114) sur des côtés opposés dudit disque de frein (102, 104) afin d'effectuer un freinage lors de la manoeuvre de leurs moyens d'activation (132) ;
(d) ledit disque de frein (102, 104) pouvant coulisser axialement en utilisation par rapport à ladite monture (106) associée sous l'action desdits éléments de friction (108, 110, 112) et desdits moyens d'activation (132) associés pendant le freinage ;
(e) une monture non rotative (118) comprenant un étrier (120) pour lesdits éléments de friction (108, 110, 112), prévu pour permettre un mouvement coulissant d'au moins un de ces derniers en contact et hors de contact de friction avec ledit disque (102, 104), tout en résistant à son mouvement sous l'action des forces de friction engendrées par son contact avec ledit disque (102, 104) ; et
(f) ledit étrier (120) comprenant un pont d'étrier (122) qui peut s'étendre en travers d'une périphérie dudit disque (102, 104) et deux parties latérales d'étrier (124, 126) prévues pour être placées une de chaque côté latéral dudit disque (102, 104) ;
(g) ladite monture rotative (106) pour ledit disque de frein (102, 104) comprenant un palier de roue (128) d'une roue d'un véhicule automobile et présentant ledit palier de roue (128) monté sur une structure de support non rotative (130) connectée, d'un côté dudit disque (102, 104), à une desdites parties latérales (124) dudit étrier non rotatif (120), et servant à monter également, sur le même côté dudit disque (102, 104), lesdits moyens d'activation (132) pour ledit frein (100) comprenant un dispositif à piston et cylindre (134, 136) ;
(h) ledit pont d'étrier (122) et ladite une desdites parties latérales d'étrier (124) sur ledit premier côté dudit disque (102, 104) comprenant une structure intégrée sous la forme d'une pièce coulée de façon à pouvoir transmettre les efforts de freinage directement dans la partie latérale d'étrier (124) qui est montée sur ladite structure de support non rotative (130) qui porte ledit dispositif à piston et cylindre (134, 136) ; et
(i) ladite partie latérale d'étrier (126), de l'autre côté dudit disque (102, 104) par rapport audit dispositif à piston et cylindre (134, 136), comprenant une structure coulée intégrée avec la dire partie de pont d'étrier (122) de sorte que lesdites parties latérales d'étrier (124, 126) constituent une structure intégrée sous la forme d'une pièce coulée incorporant ledit pont d'étrier (122) ;
ledit pont d'étrier (122) comprenant une structure de base incluant des éléments de montage espacés solidaires pour lesdits éléments de friction (108, 110, 112), la structure de base et les éléments de montage définissant un espace à l'intérieur de l'étrier permettant le positionnement d'au moins un élément de friction (108, 110, 112) par insertion dans sa position de travail à travers l'espace dans l'étrier (120) entre lesdits éléments de montage de façon à être supporté sur ces derniers, sans démonter ledit disque de frein (102, 104) ;
**caractérisé en ce que** lesdites parties latérales d'étrier (124, 126), ledit pont d'étrier (122) et la structure de support non rotative (130) sont formés en une structure moulée intégrée unitaire.

2. Frein à disque du type par points pour automobiles (100) selon la revendication 1, comprenant deux disques de frein rotatifs (102, 104) montés de façon axialement coulissante en utilisation par rapport à ladite monture (106) associée sous l'action desdits éléments de friction (108, 110, 112) et desdits moyens d'activation (132) associés pendant le freinage.
